# EUROPEAN PATENT SPECIFICATION

(11) **EP 4 455 528 B1**
(45) Date of publication and mention of the grant of the patent: **09.07.2025**
(21) Application number: 23170784.5
(22) Date of filing: 28.04.2023
(51) Int. Cl.: F16L 11/08, B32B 1/08

(54) **BRAIDED HOSE**
GEFLOCHTENER SCHLAUCH
TUYAU TRESSÉ

(43) Date of publication of application: 30.10.2024
(73) Proprietor: Danfoss A/S, 6430 Nordborg (DK)
(72) Inventor: SINGH, Dipak, 6430 Nordborg (DK); THEBERATH, Björn, 6430 Nordborg (DK); SCHMIDT, Jürgen, 6430 Nordborg (DK)
(74) Representative: Kuhnen & Wacker Patent- und Rechtsanwaltsbüro PartG mbB

(56) References cited:
- US-A1- 2002 100 516
- US-A1- 2019 186 656

## Description

The invention relates to flexible hoses reinforced with a layer of braided filaments, so called braided hoses, in particular hoses with braided metallic wires and/or braided natural or synthetic fibers. The invention relates in particular to flexible, hydraulic hoses of the braided design for low, medium, or high pressure applications. The invention refers further to a method for manufacturing such braided hoses.

In general, a hydraulic hose transfers fluids under pressure from one place to another. Flexible hydraulic hoses are used in a variety of hydraulic applications for conveying pressurized hydraulic fluid to pressure applications, e.g., hydraulic cylinders or hydraulic motors and pumps. Hydraulic hoses are used in a variety of industries like oil and gas drilling, agricultural, construction, mining equipment, heavy-machinery, household appliances, etc. Hydraulic hoses fail due to various factors like fatigue fracture due to pressure impulses, elongation, contraction, pulling, abrasion, twisting of wire layers, or due to multi plane bending, varying operating conditions, etc. The operating conditions of the hose determine its service life. For instance, extremes in temperature accelerate aging, frequent and extreme pressure fluctuations accelerate fatigue life of hose.

In general, hoses are made from one or a combination of many different materials. The material of the hose being used largely depends on the application and the performance needed from the hose. Some of the common materials for hoses include nylon, polyurethane, polyethylene, PVC or synthetic or natural rubbers. In order to achieve a better pressure resistance, hoses can be reinforced with fibers or stainless steel wires. Some of the commonly used reinforcement methods include braiding, spiraling, knitting, and wrapping. Variations in hose can be due to its size, rated temperature, weight, numbers of reinforcement layers, type of reinforcement layers, rated working pressure, flexibility, and economics.

The reinforcement layers are often braided, such that the individual wires can move relative to each other allowing for a higher flexibility of the braided hose, compared to hoses with a spiral-wound metal wire reinforcement layer. The present invention is focused on braided hoses only.

Typically, metal wire braided hoses are used in high pressure applications, particularly in hydraulic applications. The metal braided reinforcement layers provide additional strength to the hose, such that it can withstand the high hydraulic pressures. Consequently, a hydraulic braided hose can be described as a composite structure primarily made of alternate layers of rubber and steel. For example, a braided hose can consist primarily of three layers namely: Inner tube, Reinforcement and Protective Layer.

A braided hose according to the preamble of claim 1 is known from US 2019/0186656 A1.

When the metal wire braided hoses are used for hydraulic applications in which pressure peaks and impulses are generated, for example by suddenly opening or closing a valve in the hydraulic system, the wires of the metal braided layers are subjected to varying stresses. These varying stresses can result in fatigue fracture and earlier failure of the braided layer(s), as to when a continuous pressure would be present in the hose. A further cause of fatigue fracture of the wires is due to the bending of the hoses, in particular by dynamically bending with changing bending radii.

Additionally, in many assemblies for high-pressure hydraulic hose application the actual bending radii are much smaller than the homologated minimum hose bend radius specified. Hence, the high bent zones create a lot of tensile force on the inner tube, the reinforcement layer, the protective layer and/or other layers of the braided hose which results in tensile cracks and hence early hose leakage.

In order to avoid small bent radii in such applications and/or to improve fatigue resistance spiral-wound metal layer are used in the prior art. However spiral-wound metal layer hoses do not admit small bent radii as metal braided hoses do, because spiral-wound metal layer hoses are much more rigid than braided hoses. Hence spiral-wound metal layer hoses are not suitable for applications where small bent radii are required. Moreover spiral-wound metal layer hoses are approx. 30% more costlier than braided hoses with a comparable number of layers.

It is therefore an object of the present application to provide a braided hose which is more robust against fatigue fracture and tensile cracks and can be manufactured more cost effective than hoses showing a spiral-wounded metal layer for reinforcement.

The object according to the invention is solved by a braided hose according to independent claim 1, which can be manufactured according to the method disclosed with independent claim 12. Preferred embodiments are provided by the subclaims depending on the respective independent claims.

The hose according to the invention comprises an inner tube defining a longitudinal axis and is made of an elastic material, such as a synthetic or natural rubber, or of a thermoplastic material. The inner tube comprises two or more layers, one of which, is a vulcanized rubber layer and another layer is made of a textile fabric. A first braided reinforcement layer envelops the inner tube and provides a mechanical reinforcement against pressure and mechanical loads which can act on the hose. An outer protective layer is provided around the at least first braided layer to protect the braided layer and the inner tube against ambient influences like abrasion weather conditions, fire, dirt, moisture, chemicals, and the like and protects the braided layer and all other inner layers from corrosion or drying-out or losing their elastic characteristics.

According to the invention a leno layer is placed between the inner tube and the first braided reinforcement layer to protect on the one hand the inner tube for being pierced by broken fibers of the braided layer and on the other hand to reinforce the inner tube. At the same time the leno layer maintains the flexibility of the hose and permits that the hose according to the invention can be bent basically in the same magnitude as hoses with braided reinforcement layers known in the state of the art. By using a leno layer arranged around the inner tube and inside the most inner braided layer the flexibility of the braided hose is not as negatively affected as a layer of spiral-wound filaments would, in particular one with metal wires.

For this the leno layer in one embodiment comprise longitudinal/axial oriented and transverse/circumferential oriented arranged filaments. in another embodiment the filaments/stands/fibers of the leno layer are oriented in an angle with longitudinal direction of the braided hose. Thereby the material of the filaments or fibers in a first orientation must not coincide with the material of the filaments or fibers oriented in another direction, traverse to the first filaments, e.g. Moreover, in some embodiment it might be preferred that the material of the (longitudinal) oriented fibers show a higher flexibility than the ones oriented in the other (transverse) direction. Also, the material a leno layer may be made of and/or the thickness of the filaments may be different.

In another embodiment the filaments of the leno layer are arranged in the leno material perpendicular to each other. However, the leno layer itself may be applied to the inner tube with filament angle different to 90° in a wounded manner, e.g. However, it is covered by the invention that the leno layer is applied to the inner tube as a second tube like a net or a web, which can be elastic, semi elastic, or rigid.

Preferably the leno layer is a net, a web, a fabric, a textile or a mesh or a kind of grit, and can be made out of metal, plastic, or reinforced plastic strands, rubber, or reinforced rubbers filaments or of textile filaments or a mixture of these materials. Needless to say, that the leno layer can be also a leno fabric with warp yarns twisted about the weft yarns. Here a person skilled in the relevant art will find a multitude of other textiles, fabrics or meshes of a multitude of materials fulfilling the requirements according to the invention. According to the invention the leno layer can be of any material as long the leno layer is embedded in or envelops the inner tube and does not reduce the bend flexibility of a hose comprising at least one braided fiber reinforcement layer in a magnitude a spiral-wound metal layer would. Preferably the flexibility of the braided hose according to the invention is the same as a comparable to a state-of-the-art braided hose with the same number of braided reinforcement layers, however not comprising a leno layer according to the invention.

The leno layer can be, e.g., in one embodiment of the invention, a kind of polyester net, web, or mesh in which the polyester strands/filament are arranged perpendicular to each other, or a woven textile with equal or different warp and weft yarns. The term leno layer is just a term used for describing a layer which is capable to protect and reinforce the inner tube and simultaneously maintaining the flexibility of the so enveloped inner tube such that the flexibility of the at least one braided layer is not negatively affected and that the braided hose according to the invention allows bent radii which are smaller than bent radii of hoses having spiral-wound reinforcement layers, or even smaller than admissible bend radii of braided hoses according to the state of the art with an equal number of braided layers. Thereby the leno layer may also improve the mechanical strength in axial, radial, and/or circumferential direction of the braided hose according to the invention.

According to the invention single or multi material leno layers are usable with the invention likewise as well as more than one leno layer. These different leno layers can be of different materials or different structure. Analogous the invention is not limited to braided hoses with only one braided layer since is applicable as well to braided hoses having two or more braided layers. Thereby it is imaginable to arrange inside each braided layer a leno layer such that, e.g., a leno layer further to the first leno layer enveloping the inner tube, is sandwiched by two braided layers.

The use of a leno layer according to the invention opens the possibility to a broader selection of inner tube materials, as the leno layer can take over certain functions or characteristics of the inner tube material, e.g., mechanical strength in axial, radial and/or circumferential direction of the hose. So, it is imaginable to use a softer, more elastic material for the inner tube which may provide more chemical resistance against the fluid to be conveyed by the hose, or to provide more thermal stability, e.g. **In** all these cases and other applications where the braided hose according to the invention is intended to be used the inner tube can be freed of requirements which can be provided by a suitable leno layer material for forming the leno layer and a suitable way of enveloping the inner tube according to the invention.

In another preferred embodiment of the invention a tie layer is applied over the leno layer or the leno layer is applied over a tie layer surrounding the inner tube. By doing so the adhesion of the leno layer to the inner tube can be enhanced, in particular when the inner tube is made of a material, e.g., a thermoplastic material, which would allow a relative movement between the inner tube and the leno layer. The tie layer may also provide an additional protection layer for the inner tube if it is made of a suitable material.

In another implementation of the invention an intermediate layer is arranged between the leno layer and the braided layer, wherein the intermediate layer is made of an elastic material, such as a synthetic or natural rubber, or of a thermoplastic material. Thereby the intermediate layer can be applied on the leno layer by extrusion or by a laminating process, e.g., applying a tie layer on the leno layer before. The intermediate layer may comprise carbon or glass fibers to enhance burst stability of the braided hose. The intermediate layer may also be a layer enhancing kinking stability or resistance against piercing or cutting.

According to the invention the inner tube can be of NBR, HNBR, CSM, SBR, rubber material or a mixture thereof according to, e.g., WO 2017/055168 where such a mixture of rubber materials is descripted in detail. However, a person skilled in the relevant art will see that any material commonly used for inner tubes of braided hoses can be used in implementation of the invention as well. Thereby cured and uncured rubber materials can be used for the inner tube as well as for the intermediate layer.

Preferably a braided hose according to the invention comprises an outer protective layer as well. Such an outer protective layer can be made, e.g., of synthetic or natural rubber or a plastic material or any other suitable material for protecting the braided layer, the inner layers, e.g., rubber layers to dry-out and/or becoming brittle. The outer layer may be also a material resistant against water, solvents, oil, gasoline, chemicals or the like. The outer protective layer may also protect the braided hose against weather and/or harsh environments. Preferably the outer protective layer is printable to indicate the specifications and homologations of the braided hose according to the invention.

The braided hose according to the invention is manufactured in that first in a step a) a mandrel is provided, which normally is made from a thermoplastic material, e.g., nylon, in an extrusion process. After cooling and perhaps a subsequent preparation of the mandrel synthetic or natural rubber usually in the uncured state, or a thermoplastic material is applied on the mandrel in a step b) to form an inner tube around the mandrel, e.g. by rewinding. Now, in a step c) according to the invention, the inner tube formed on the mandrel is enveloped with a leno layer being a net, a web, a fabric, or a mesh out of metal, plastic, or reinforced plastic strands or of textile filaments or mixture thereof, as already detailed above. In the next step d) a braided reinforcement layer is braided/applied on the leno layer. Thereby filaments, strands, wire (strands) are wrapped around the leno layer in a preferably continuous process forming a (reinforcing) braid.

Subsequent to step d) an outer protective layer covering the braided layer can be applied to the braided hose according to the invention. The braided hose is finished by extracting the mandrel after curing at least the inner tube material, in case this was not done already before or after step d), i.e., before or after the braided layer was wrapped around the inner tube being enveloped by the leno layer. This also means that curing of the inner tube material is a manufacturing step which can be done at different timings depending, for instance, on the material used for the leno layer or the material used for the braided layer. Preferably the step of extracting the mandrel is done after curing and with the braided layer protected by another layer, e.g., the outer protective layer. In another embodiment of the invention, it is imaginable that the mandrel is extracted from the cured inner tube before the braided layer is placed on the leno layer, as the leno layer may reinforce the cured inner tube sufficiently to support the mechanical forces occurring during extraction of the mandrel.

As curing, the so called vulcanization in case of synthetic or natural rubber materials of the inner tube material is normally done by applying heat and optionally pressure, the curing step should be done before heat-sensible layers are applied to the braided hose. As braided hoses often should be heat-resistant, all layer materials should be also heat resistant, hence the step of curing may be performed any time after the leno layer is applied and to the cured inner tube. In some cases, it can be preferred to perform the step of curing after the leno layer is applied on the inner tube material such that the leno layer cures together with inner tube material and preferable makes the additional application of a tie layer superfluous. **In** case a thermoplastic material is used for forming the inner tube, the step of curing can be omitted as a thermoplastic material normally does not need curing after the warm deformable thermoplastic material has cooled down and has become stiff.

Before, e.g., in a step i) the mandrel can be extracted from the braided hose an outer protective layer can be placed over the braided layer. The outer protective layer is applied over the at least one braided layer preferably before extracting the mandrel in order that the braided layer is not damaged during extraction of the mandrel. Before the mandrel in a step i) according to the invention is extracted from the braided hose the outer protective layer can be wrapped in a textile fabric for enhancing the curing process and protecting the outer layer during curing from being damaged. After curing the braided hose according to the invention is unwrapped and the outer protective layer is, e.g., printed to indicate the specifications which the braided hose fulfils.

As mentioned above the braided hose according to the invention can comprise one or more braided layers depending on the requirements placed to the hose. As the leno layer around the inner tube reinforce and protects the inner tube from being pierced by broken braid wires, no spiral wound (metal) layer is necessary to further reinforce the braided hose according to the invention. This is achieved also by the fact that the leno layer provides mechanical reinforcement to the braided hose, in particular to the inner tube, such that the braided hose according to the invention is more resistant against fatigue fracture and burst. Thereby the braided hose according to the invention maintains its flexibility and the braided hose according to the invention can be used in braided hose applications with a higher burden than braided hoses know in the art not having a leno layer enveloping the inner tube.

According to the invention the leno layer can be placed over inner tube by wrapping the leno mesh, net, etc. in a spiral way around the inner tube, or the leno net can be placed over inner tube in form of a tube in a continuous process like a stocking or a packaging net. Thereby the orientation of the leno layer filaments can be adjusted/adapted/twisted according to the needs of the braided hose. E.g., when a kind of leno net tube is placed over the inner tube in a continuous process the leno net tube can be drilled wound around during the placement on the inner tube to provide a higher reinforcement effect to the inner tube and therewith to the braided hose.

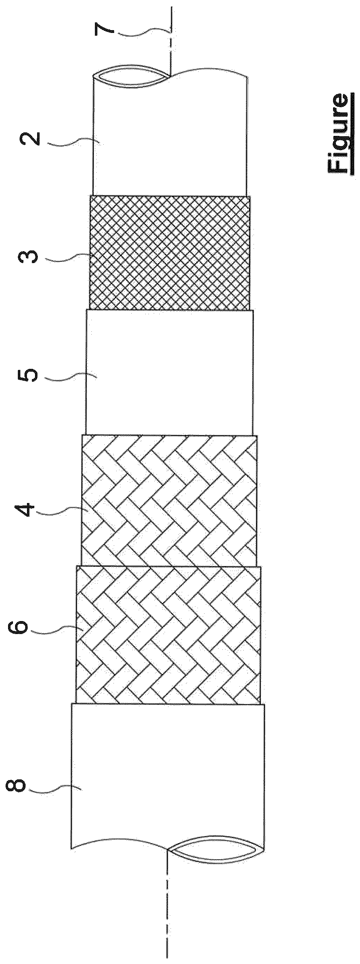

With the help of the enclosed drawing a preferred embodiment of the braided hose according to the invention is explained in more detail in order to enhance the understanding of the basic idea of the invention. The present embodiment does not limit the scope of the idea of the invention, but only represent one possible design alternative, to which within the knowledge of a person with skills in the relevant art modifications can be made without leaving the scope of the invention. Therefore, all those modifications and changes are covered by the claimed invention.

The Figure shows a braided hose 1 according to the invention in a preferred embodiment having two braided layers 4 and 6. However, as already mentioned above in implementation of the idea according to the invention only one braided layer is sufficient to comply with the idea of the invention. The second braided layer shown in the annexed Figure further increases the mechanical strength of the braided hose. As indicated with reference number 3 a leno layer is placed around the inner tube 2. In the embodiment shown with the annexed Figure the leno layer filaments are oriented in an angle of approx. 45° to the longitudinal axis 7. The leno layer filaments however can be oriented also in different angels and directions according to the needs of the braided hose. So, filament orientations longitudinal and transversal to the longitudinal direction 7 are realizable as well as orientations of any angle different to 90°.

In one embodiment using a leno fabric with weft yarns and two different wrap yarns which are twisted around the weft yarn, the weft yarns of the leno fabric, e.g., can be oriented in the longitudinal direction 7 for improving the stretch resistance of the braided hose, wherein the wrap yarns are oriented perpendicular to the longitudinal direction to improve burst stability. Thereby the materials of the two wrap yarns must not be the same. Here a person skilled in the relevant art will see a multitude of possibilities to arrange the leno layer filaments forming a fabric or being a net, to the needs or requirements placed to the braided hose.

According to the shown embodiment and to improve the adhesion between the leno layer 3 and the inner tube 2 and/or between the first braided layer 4 and the leno layer 3 a tie layer 5 is used. This tie layer 5also reduces the possibility of a relative movement of the single layers to a minimum or disables relative movements completely. The tie layer or an additional tie layer hence may also be placed between the leno layer 3 and the inner tube 2. Additionally, a tie layer 5 can also be placed between the two braided layers 4 and 6, and also between the outermost braided layer 6 and the outer protective layer 8.

As also can be derived from the annexed Figure the two braided layers 4 and 6 can be braided in equal or different directions and/or angels. In the embodiment shown in the Figure the braid angle is exemplarily 45° but can be also 60° or any other usual braid angle without leaving the scope of the inventive idea.

In summary all layers of the shown embodiment in the annexed Figure can be applied in multiple combinations and numbers in a braided hose 1 as long as according to the invention one leno layer 3 placed directly around the inner tube 2 for protecting and reinforcing the inner tube 2. Hence multiplying of layers as well as adding other layers not mentioned, however know in the art, is covered by the inventive idea as long as one leno layer 3 directly envelops the inner tube 2.

### Reference list:

- 1: Braided hose
- 2: Inner tube
- 3: Leno layer
- 4: Braide layer
- 5: Tie layer
- 6: Braided layer
- 7: Longitudinal direction
- 8: Outer protective layer

## Claims

1. Braided hose (1) comprising:
- an inner tube (2) defining a longitudinal axis (7) made of an elastic material, such as a synthetic or natural rubber, or of a thermoplastic material;
- a first braided reinforcement layer (4) enveloping the inner tube (2);
- an outer protective layer (8);
wherein a leno layer (3) is placed between the inner tube (2) and the first braided reinforcement layer (4), **characterized in that**
the inner tube comprises two or more layers, one of which is a vulcanized rubber layer, and another layer is made of a textile fabric.

2. Hose (1) according to claim 1, wherein the leno layer (3) is a fabric or a mesh out of metal, plastic, or reinforced plastic strands or of textile filaments or a mixture thereof.

3. Hose (1) according to claim 1 or 2, wherein the leno layer (3) is an endless sheet-like material which is wound around the inner tube (2) or a tube-like net material is placed like a packing net on the inner tube (2) in a continuous process in longitudinal direction or placed in a spiral application on the inner tube (2).

4. Hose (1) according to any of the previous claims, wherein a tie layer (5) is applied over the leno layer (3) and/or the leno layer (3) is applied over a tie layer (5) surrounding the inner tube (2).

5. Hose (1) according to any of the previous claims, wherein the first braided reinforcement layer is made of braided metal wires, textile and/or plastic or reinforced plastic strands or filaments or mixture thereof.

6. Hose (1) according to any of the previous claims, wherein at least a second braided or spiral reinforcement layer envelops the first braided layer.

7. Hose (1) according to claim 5, wherein the at least a second braided reinforcement layer is made of metal wires, textile and/or synthetic filaments or mixture thereof.

8. Hose (1) according to any of the previous claims, wherein an intermediate layer is arranged at least between the leno layer and the first reinforcement layer or between the first and the second reinforcement layer.

9. Hose (1) according to claim 8, wherein the intermediate layer is made of an elastic material, such as a synthetic or natural rubber, or of a thermoplastic material

10. Hose (1) according to any of the previous claims, wherein the inner tube is made of NBR, HNBR, CSM, SBR, or a mixture thereof.

11. Hose (1) according to any of the previous claims, wherein the outer protective layer is made of synthetic or natural rubber

12. Method of manufacturing a braided hose comprising the following steps of:
a) providing a mandrel;
b) applying a synthetic or natural rubber, or a thermoplastic material on the mandrel to form an inner tube around the mandrel, wherein the inner tube comprises two or more layers, one of which is a vulcanized rubber layer, and another layer is made of a textile fabric;
c) enveloping the inner tube with a leno layer being a net, a web, fabric, or a mesh out of metal, plastic, or reinforced plastic strands or of textile filaments or mixture thereof;
d) applying a braided reinforcement layer on the leno layer;
e) applying an outer protective layer over the braided layer;
i) Extracting the mandrel.

13. Method according to claim 12, comprising after step e) and before step i) the steps of:
f) Wrapping a textile fabric around the outer protective layer
g) Curing at least one of the inner tube or the outer protective layer;
h) Unwrapping the hose.

## Patentansprüche

1. Gewebeschlauch (1), aufweisend:
- einen Innenschlauch (2), der eine Längsachse (7) definiert und aus einem elastischen Material, wie synthetischem oder natürlichem Kautschuk, oder aus einem thermoplastischen Material besteht;
- eine erste geflochtene Verstärkungslage (4), die den Innenschlauch (2) umhüllt;
- eine äußere Schutzschicht (8);
wobei eine Gewebeschicht (3) zwischen dem Innenschlauch (2) und der ersten geflochtenen Verstärkungslage (4) angeordnet ist,
**dadurch gekennzeichnet, dass**
der Innenschlauch zwei oder mehr Schichten aufweist, von denen eine eine vulkanisierte Gummischicht ist, und eine andere Schicht aus einem Textilgewebe besteht.

2. Schlauch (1) nach Anspruch 1, wobei die Gewebeschicht (3) ein Gewebe oder ein Netz aus Metall-, Kunststoff- oder verstärkten Kunststoffsträngen oder aus textilen Filamenten oder einer Mischung davon ist.

3. Schlauch (1) nach Anspruch 1 oder 2, wobei die Gewebeschicht (3) ein Endlosbahnmaterial ist, das um das Innenrohr (2) gewickelt ist, oder ein schlauchartiges Netzmaterial, das wie ein Packnetz in einem kontinuierlichen Prozess in Längsrichtung auf das Innenrohr (2) aufgebracht ist oder in einer spiralförmigen Verfahren auf das Innenrohr (2) aufgebracht ist.

4. Schlauch (1) nach einem der vorhergehenden Ansprüche, wobei eine Bindeschicht (5) über der Gewebeschicht (3) und/oder die Gewebeschicht (3) über eine den Innenschlauch (2) umgebende Bindeschicht (5) aufgebracht ist.

5. Schlauch (1) nach einem der vorhergehenden Ansprüche, wobei die erste geflochtene Verstärkungslage aus geflochtenen Metalldrähten, Textil- und/oder Kunststoff- oder verstärkten Kunststoffsträngen oder -filamenten oder einer Mischung davon besteht.

6. Schlauch (1) nach einem der vorhergehenden Ansprüche, wobei zumindest eine zweite geflochtene oder spiralförmige Verstärkungslage die erste geflochtene Lage umhüllt.

7. Schlauch (1) nach Anspruch 5, wobei die zumindest eine zweite geflochtene Verstärkungslage aus Metalldrähten, textilen und/oder synthetischen Filamenten oder einer Mischung daraus besteht.

8. Schlauch (1) nach einem der vorhergehenden Ansprüche, wobei eine Zwischenschicht zumindest zwischen der Gewebeschicht und der ersten Verstärkungslage oder zwischen der ersten und der zweiten Verstärkungslage angeordnet ist.

9. Schlauch (1) nach Anspruch 8, wobei die Zwischenschicht aus einem elastischen Material, wie z.B. einem synthetischen oder natürlichen Kautschuk, oder aus einem thermoplastischen Material hergestellt ist.

10. Schlauch (1) nach einem der vorhergehenden Ansprüche, wobei das Innenschlauch aus NBR, HNBR, CSM, SBR oder einer Mischung davon besteht.

11. Schlauch (1) nach einem der vorhergehenden Ansprüche, wobei die äußere Schutzschicht aus synthetischem oder natürlichem Kautschuk hergestellt ist.

12. Verfahren zur Herstellung eines Gewebeschlauchs, das die folgenden Schritte aufweist:
a) Bereitstellen eines Dorns;
b) Aufbringen eines synthetischen oder natürlichen Kautschuks oder eines thermoplastischen Materials auf den Dorn, um einen Innenschlauch um den Dorn herum zu bilden, wobei der Innenschlauch zwei oder mehr Schichten aufweist, von denen eine eine vulkanisierte Kautschukschicht ist und eine andere Schicht aus einem Textilgewebe besteht;
c) Umhüllen des Innenschlauchs mit einer Gewebeschicht, die ein Netz, eine Bahn, ein Gewebe oder eine Masche aus Metall-, Kunststoff- oder verstärkten Kunststoffsträngen oder aus Textilfäden oder einer Mischung davon ist;
d) Aufbringen einer geflochtenen Verstärkungslage auf die Gewebeschicht;
e) Aufbringen einer äußeren Schutzschicht auf die geflochtene Schicht;
i) Herausziehen des Dorns.

13. Verfahren nach Anspruch 12, das nach Schritt e) und vor Schritt i) die folgenden Schritte aufweist:
f) Umwickeln der äußeren Schutzschicht mit einem Textilgewebe
g) Aushärten zumindest des Innenschlauchs oder der äußeren Schutzschicht;
h) Freilegen des Schlauchs.

## Revendications

1. Tuyau tressé (1) comprenant :
- un tube interne (2) définissant un axe longitudinal (7) fait d'un matériau élastique, tel qu'un caoutchouc synthétique ou naturel, ou d'un matériau thermoplastique ;
- une première couche de renforcement tressée (4) enveloppant le tube interne (2) ;
- une couche de protection externe (8) ;
dans lequel une couche de gaze (3) est placée entre le tube interne (2) et la première couche de renforcement tressée (4), **caractérisé en ce que**
le tube interne comprend deux couches ou plus, l'une d'elles est une couche de caoutchouc vulcanisé et une autre couche est faite d'un tissu textile.

2. Tuyau (1) selon la revendication 1, dans lequel la couche de gaze (3) est un tissu ou un maillage de métal, de plastique, ou de brins de plastique renforcé ou de filaments de textile ou d'un mélange de ceux-ci.

3. Tuyau (1) selon la revendication 1 ou 2, dans lequel la couche de gaze (3) est un matériau de type feuille sans fin qui est enroulé autour du tube interne (2) ou un matériau en filet de type tube est placé comme un filet de garnissage sur le tube interne (2) selon un processus continu dans une direction longitudinale ou placée selon une application en spirale sur le tube interne (2).

4. Tuyau (1) selon l'une quelconque des revendications précédentes, dans lequel une couche de liaison (5) est appliquée sur la couche de gaze (3) et/ou la couche de gaze (3) est appliquée sur une couche de liaison (5) entourant le tube interne (2).

5. Tuyau (1) selon l'une quelconque des revendications précédentes, dans lequel la première couche de renforcement tressée est faite de fils métalliques tressés, de textile et/ou de plastique ou de brins de plastique renforcé ou de filaments ou d'un mélange de ceux-ci.

6. Tuyau (1) selon l'une quelconque des revendications précédentes, dans lequel au moins une deuxième couche de renforcement tressée ou en spirale enveloppe la première couche tressée.

7. Tuyau (1) selon la revendication 5, dans lequel la deuxième ou plus couche de renforcement tressée est faite de fils métalliques, de textile et/ou de filaments synthétiques ou d'un mélange de ceux-ci.

8. Tuyau (1) selon l'une quelconque des revendications précédentes, dans lequel une couche intermédiaire est agencée au moins entre la couche de gaze et la première couche de renforcement ou entre la première et la deuxième couche de renforcement.

9. Tuyau (1) selon la revendication 8, dans lequel la couche intermédiaire est faite d'un matériau élastique, tel qu'un caoutchouc synthétique ou naturel, ou d'un matériau thermoplastique.

10. Tuyau (1) selon l'une quelconque des revendications précédentes, dans lequel le tube interne est fait de NBR, HNBR, CSM, SBR ou d'un mélange de ceux-ci.

11. Tuyau (1) selon l'une quelconque des revendications précédentes, dans lequel la couche de protection externe est faite de caoutchouc synthétique ou naturel.

12. Procédé de fabrication d'un tuyau tressé comprenant les étapes suivantes consistant à :
a) fournir un mandrin ;
b) appliquer un caoutchouc synthétique ou naturel, ou un matériau thermoplastique sur le mandrin pour former un tube interne autour du mandrin, le tube interne comprenant deux couches ou plus, l'une d'elles est une couche de caoutchouc vulcanisé et une autre couche est faite d'un tissu textile ;
c) envelopper le tube interne d'une couche de gaze qui est un filet, une nappe, un tissu ou un maillage de métal, de plastique, ou de brins de plastique renforcé ou de filaments de textile ou d'un mélange de ceux-ci ;
d) appliquer une couche de renforcement tressée sur la couche de gaze ;
e) appliquer une couche de protection externe sur la couche tressée ;
i) extraire le mandrin.

13. Procédé selon la revendication 12, comprenant après l'étape e) et avant l'étape i) les étapes suivantes consistant à :
f) enrouler un tissu textile autour de la couche de protection externe ;
g) durcir au moins l'un du tube interne ou de la couche de protection externe ;
h) dérouler le tuyau.
